# EUROPEAN PATENT APPLICATION

(11) **EP 4 545 275 A1**
(43) Date of publication of application: **30.04.2025**
(21) Application number: 23206143.2
(22) Date of filing: 26.10.2023
(51) Int. Cl.: B29C 64/106, B29C 64/135, B29C 64/255, B33Y 10/00, B33Y 30/00, H04R 25/00

(54) **CARTRIDGE AND METHOD FOR PRODUCING AN EARPIECE**

(71) Applicant: Sonova AG, 8712 Stäfa (CH)
(72) Inventor: RICHNER, Patrizia, 8708 Männedorf (CH); FURRER, Florian, 8004 Zürich (CH); SCHMIDT, Fabio, 8707 Uetikon am See (CH); KURMANN, Christian, 8706 Meilen (CH)
(74) Representative: Liedtke & Partner Patentanwälte

(57) **Abstract**

The invention relates to a cartridge (9) comprising:
- a transparent vial (3), at least partially filled with a curable liquid printing material (4), in particular a resin,
- a cap (5) sealing the vial (3),
- at least one solid structure (1) submerged in the liquid printing material (4). Further, the invention relates to a method for producing at least one earpiece (10), in particular for a hearing device, the method comprising:
- providing a cartridge (9) according to any one of the claims 1 to 6,
- inserting the cartridge (9) into a printer configured for volumetric 3D printing,
- providing the printer with data for the earpiece (10) to be printed,
- determining a location of the submerged solid structure using optical means,
- printing the at least one earpiece (10) around the at least one solid structure (1) by volumetric 3D printing using the printer,
- extracting the at least one earpiece (10) from the cartridge (9).

## Description

### Technical Field

The invention relates to a cartridge and to a method for producing an earpiece.

### Background of the Invention

Custom earpieces, e.g. for hearing devices, are typically manufactured in a multistep process, including (but not limited to) modelling, 3D printing (in particular volumetric 3D printing), post-curing, washing, serializing, assembly and lacquer steps. This time-consuming and complex process is currently only economical in dedicated, specialized production sites with trained personnel. This means that the user has to wait around two weeks until they receive their custom-manufactured earpiece.

US 2022/0227051 A1 describes a method for producing a three-dimensional object in an optically reactive starting material, comprising: radiating the starting material with light of a first wavelength and light of a second wavelength that is different from the first wavelength.

Volumetric 3D printing requires careful handling of materials, components and production equipment by experienced personnel. It is not easy to achieve consistent, satisfying results in particular in a non-laboratory environment. There is thus a need for a fast, save, and simple process for producing an earpiece without compromising regulatory requirements and reliability targets.

### Summary of the Invention

It is an object of the present invention to provide a novel solution for producing an earpiece.

The object is achieved by a cartridge according to claim 1 and by a method for producing an earpiece according to claim 9.

Preferred embodiments of the invention are given in the dependent claims.

A cartridge is proposed, comprising:
- a transparent vial, at least partially filled with a curable liquid printing material, in particular a resin,
- a cap or lid sealing the vial,
- at least one solid structure submerged in the liquid printing material, e.g. completely submerged in or covered by the liquid printing material.

Above the liquid printing material, an air pocket may exist in the vial. The air pocket may facilitate removal of the cap or lid after a printing process. Moreover, the air pocket may expand or contract to compensate possible volume changes during the printing process.

In some embodiments, more than one solid structure may be arranged in the vial to produce a respective earpiece around each solid structure. For example, two solid structures may be arranged in the vial spaced from each other, e.g. one beside or above the other, to allow for producing two separate earpieces around each solid structure.

In an exemplary embodiment, the at least one solid structure may be connected to a filament or cable attached to the vial or cap and hang from the filament or cable into the liquid printing material.

In another exemplary embodiment, the at least one solid structure may float freely in the liquid printing material without a filament or cable.

The cartridge is suitable to be used in a volumetric 3D printing process for printing a three dimensional structure, e.g. an earpiece, in particular for a hearing device, around the at least one solid structure.

In an exemplary embodiment, the filament or cable is lead through a sealed opening in the cap or vial.

The solid structure may comprise an electric component such as an electronic circuit, a switch, a battery or an electrical to acoustical converter. It may comprise a non-electrical component such as a vent, a frame, a hook, an acoustic filter, a membrane, a removal filament and/or a connector in the alternative or in addition.

In an exemplary embodiment, the at least one solid structure comprises a receiver and/or at least one handle and/or at least one removal filament and/or at least one printed circuit board and/or at least one sensor and/or at least one microphone and/or at least one hollow structure.

In an exemplary embodiment, the hollow structure is a vent and/or a backventing volume or an adapter configured to receive at least one electronic component or assembly. The adapter may be made of silicone.

In some cases, the solid structure may comprise components, which need to be protected by appropriate measures. The electrical, mechanical or acoustical function of a component or an assembly of components might be compromised if it comes into contact with the liquid printing material. For example, a moving part of a component might be immobilized after curing of the liquid printing material. An acoustical characteristic of an acoustic element may deviate from its specification if its geometry after curing is changed due to a contamination with liquid printing material.

In an exemplary embodiment, the receiver, sensor, microphone or hollow structure comprises at least one opening which is sealed by a removable protective element such as a plug to prevent contamination by the liquid printing material.

In an exemplary embodiment, the cap is configured to be only removable by a post-processing unit or printer.

The liquid printing material may have a high viscosity, e.g. more than 1 Pa s, in particular 1 Pa s to 100 Pa s. This allows for placing the solid structures into the liquid printing material at a determined position when manufacturing the vial and the solid structure to remain there at least until the vial is used in the volumetric 3D printing process. In an exemplary embodiment, a specific density of the solid structure is configured to be within a certain range. In an exemplary embodiment, the specific density of the solid structure is within the order of magnitude of the specific density of the liquid printing material or similar or equal to the specific density of the liquid printing material. In an exemplary embodiment, the specific density of the solid structure and/or of the liquid printing material is in the range of 0.5 g/cm³ to 5 g/cm³. If the solid structure is a hollow structure enclosing a volume of air, e.g. a receiver with a sound port sealed by a protective element or membrane, the specific density of that solid structure is lower than the specific density of the material, e.g. a metal, of which that solid structure is made.

If the viscosity of the liquid printing material is sufficiently high, a difference between the specific density of the solid structure and the liquid printing material is less critical.

According to an aspect of the present invention, a kit of multiple cartridges as described above is proposed, wherein the cartridges have solid structures of different type and/or size.

In an exemplary embodiment, the kit further comprises chemicals for rinsing a product printed in the vial around the solid structure.

According to an aspect of the present invention, a method for producing at least one earpiece, in particular for a hearing device, is proposed, the method comprising:
- providing a cartridge as described above,
- inserting the cartridge into a printer configured for volumetric 3D printing,
- providing the printer with data for the earpiece to be printed,
- determining a location of the submerged solid structure using optical means (e.g. at least one camera),
- printing the at least one earpiece around the at least one solid structure by volumetric 3D printing using the printer,
- extracting the at least one earpiece from the cartridge.

In an exemplary embodiment, the printing is performed by locally radiating the liquid printing material with light beams having a first wavelength and light beams having a second wavelength.

In an exemplary embodiment, for printing parts of the earpiece for which the at least one solid structure occludes the optical path of the light beams, the cartridge is rotated at least once by a predefined angle and a volume of the earpiece adjacent to the previously printed one is printed for each rotation.

In an exemplary embodiment, the cap is removed from the vial by a post-processing unit to which the cartridge has been moved after printing. This way, exposure of personnel to uncured resin is less likely. In particular, the printed earpiece is removed at the same time this way.

In an exemplary embodiment, the printed earpiece is rinsed and postcured by the post-processing unit or by the printer.

In an exemplary embodiment, postcuring comprises light curing, in particular UV curing, and/or oven curing.

In an exemplary embodiment, the at least one earpiece is extracted from the cartridge by the printer or by the post-processing unit.

In an exemplary embodiment, the protective element is removed from the solid structure configured as a receiver, microphone, sensor or hollow structure, e.g. by the post-processing unit. This ensures that the protective element is not removed before the piece is fully post-processed. Otherwise there might be damage to the insides of the receiver and/or microphone, etc. Removing the protective element may be a step performed after post-processing and not in the printer.

The solution according to the present invention provides a fast, save (glove free throughout process), simple (few steps involved, minimal training required) process, which needs little floorspace in a shop without compromising regulatory requirements and reliability targets.

The present invention proposes the sealed cartridges as a semifinished product to be used by a hearing care professional or user, who uses the cartridge to print the custom components in his office/practice with a (comparatively compact and easy to install) printer unit. This system is advantageous in that it provides a way to allow in-shop printing of a custom body around a functional component, e.g. an electronic component in a simple, easy and fast way. In particular, the cartridge allows the handling of the potentially hazardous resin and the resin covered printed body in a contained and glove free way. The printer and/or a post-processing unit can be configured to handle the freshly printed body automatically during all further steps (rinsing, curing etc.). Likewise, it is possible to have the user take the still sealed cartridge containing the freshly printed body out of the printer and insert it in another device, e.g. the post-processing unit, for extracting and/or rinsing and/or curing the printed body.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief Description of the Drawings

The present invention will become more fully understood from the detailed description given hereinbelow and the accompanying drawings which are given by way of illustration only, and thus, are not limitive of the present invention, and wherein:
- Figure 1: is a schematic view of a method for producing an earpiece,
- Figure 2: is a schematic top view of a vial with an at least partially polymerized earpiece, and
- Figure 3: is a schematic view of a method for producing an earpiece.

Corresponding parts are marked with the same reference symbols in all figures.

### Detailed Description of Preferred Embodiments

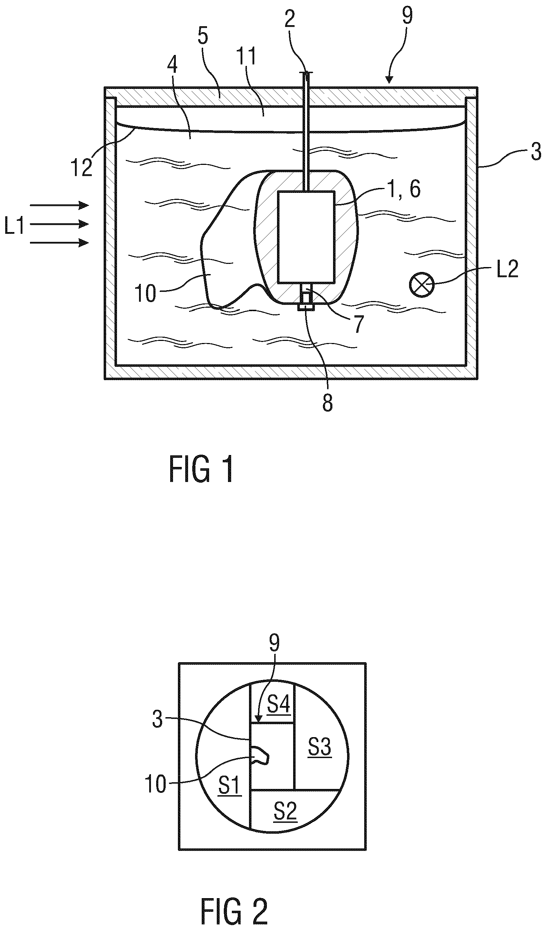

**Figure 1** is a schematic view of a method for producing an earpiece 10 according to an exemplary embodiment of the invention, e.g. for a hearing device.

The method uses volumetric 3D printing to print a shell of an earpiece (or any other geometry for that matter) around at least one solid structure 1 submerged into a liquid printing material 4. The liquid printing material 4, e.g. a resin, may contain a photoinitiator configured to locally cure when being locally (e.g. in a voxel) subjected to radiation, in particular with light. In an exemplary embodiment, the liquid printing material 4 may contain a photoinitiator configured to transition into an intermediate state when being locally (e.g. in a voxel) radiated with light of a first wavelength. Moreover, the photoinitiator in the liquid printing material 4 may be configured to transition from the intermediate state into a solid state when being locally radiated with light of a second wavelength different from the first wavelength. These steps may be repeated for a multitude of voxels to produce a 3D object. In other embodiments, volumetric 3D printing may not necessarily require light with two different wavelengths.

Volumetric 3D printing the shell of the earpiece 10 saves assembly steps and - depending on the detailed design - might even improve the product reliability as direct encapsulation replaces glued interfaces which are a typical weak spot from a reliability perspective.

In figure 1, the solid structure 1 to be encapsulated comprises a receiver 6 connected to a filament 2, e.g. a cable. In the alternative or in addition, the solid structure 1 to be encapsulated may comprise at least one electronic component in general, e.g. an electronic circuit, a switch, a battery, printed circuit board, sensor, microphone or an electrical to acoustical converter, e.g. a receiver 6, and/or a non-electronic component, e.g. a handle, removal filament, connector, frame, hook, acoustic filter, membrane and/or hollow structure (e.g. for a vent and/or a backventing volume or an adapter configured to receive at least one electronic component or assembly, which may be inserted into the adapter after production of the earpiece 10, wherein the adapter may be made of silicone). The receiver 6 has a sound port 7. In order to prevent contamination of the receiver 6 through the sound port 7, a removable protective element 8 such as a plug is arranged in or on the sound port 7 in a manner to seal the sound port 7. A removable protective element 8 such as a plug may also be applied if the solid structure 1 is a microphone, another type of sensor or hollow structure such as a vent opening of an active vent receiver or comprises a microphone, another type of sensor or a hollow structure such as a vent opening of an active vent receiver in order to seal it and to prevent contamination thereof.

The filament 2 may be a cable for electrically connecting the solid structure 1, e.g. if the solid structure 1 is or comprises a receiver 6, a microphone, a printed circuit board, a sensor, a microphone and/or an active vent. In particular, the filament 2 may remain fixedly connected to the solid structure 1 after the earpiece 10 has been produced by volumetric 3D printing.

The method comprises using a cartridge 9 which may be pre-manufactured in a mass manufacturing step. The pre-manufactured cartridge 9 comprises a translucent, in particular transparent, receptacle or vial 3 partially filled with the uncured liquid printing material 4, e.g. a resin. The at least one solid structure 1, e.g. a receiver 6, may hang from the filament 2 into the liquid printing material 4 within the vial 3, completely submerged in the uncured liquid printing material 4. In other embodiments, a filament 2 may not be needed and the solid structure 1 may freely float in the liquid printing material 4. The vial 3 is completely sealed off with a cap 5 or lid arranged on top, allowing glove-free handling. The filament 2 may be led through a sealed opening in the cap 5. Above the liquid printing material 4, an air pocket 11 exists. An interface 12 between the liquid printing material 4 and the air pocket 11 is above the at least one solid structure 1 such that the solid structure 1 is completely submerged in the liquid printing material 4. Due to the surface tension between the liquid printing material 4 and the walls of the vial 3, which may be made of glass, the interface rises toward the walls of the vial 3.

The air pocket 11 may facilitate removal of the cap 5 or lid after the printing process. Moreover, the air pocket 11 may expand or contract to compensate possible volume changes during the printing process.

In figure 1, reference 10 denotes the shape of the earpiece 10 to be produced around the solid structure 1 by volumetric 3D printing.

In the method for manufacturing the earpiece 10, the pre-manufactured vial 3 is mounted into a printer configured for volumetric 3D printing. The exact location of the at least one solid structure 1 is determined by optical means of the printer. Then a printing part location of the printer is adjusted to the previously determined location of the submerged solid structure 1 and the printing is started by locally radiating the liquid printing material 4, e.g. with a light beam L1 having the first wavelength, e.g. a laser light, and a light beam L2 having the second wavelength, e.g. visible light. In particular, the light beams L1 having the first wavelength, e.g. laser light, and the light beams L2 having the second wavelength, e.g. visible light, may be at an angle of approximately 90 degrees to each other. Since the solid structure 1 poses an opaque obstacle to the optical paths, polymerization can only occur on one side of the solid structure 1. Only the volume of the earpiece 10 accessible to both light beams L1, L2 (e.g. emitted by lasers, digital light projectors (DLP) or a combination thereof) is illuminated and polymerized.

In order to polymerize parts of the earpiece 10 occluded by the solid structure 1, the vial 3 is rotated by a predefined angle (e.g. 90° or a different, in particular smaller, angle) and a volume adjacent to the previously polymerized one is illuminated and polymerized, again only where both light beams L1, L2 can reach the volume, i.e. the voxels within said volume.

The vial 3 may be rotated again and the illumination and polymerization may be performed for the previously occluded parts of the earpiece 10 until the entire earpiece 10 is 3D printed.

**Figure 2** is a schematic top view of the vial 3 with the at least partially polymerized earpiece 10 and an exemplary first sector S1 accessible to the light beams L1, L2 of both wavelengths to polymerize a first side of the earpiece 10, a second sector S2 accessible to the light beams L1, L2 of both wavelengths to polymerize a second side of the earpiece 10 adjacent the first side after having rotated the vial 3 once by the predefined angle, a third sector S3 accessible to the light beams L1, L2 of both wavelengths to polymerize a third side of the earpiece 10 adjacent the second side after having rotated the vial 3 once again by the predefined angle, and a fourth sector S4 accessible to the light beams L1, L2 of both wavelengths to polymerize a fourth side of the earpiece 10 adjacent the first and third side after having rotated the vial 3 once again by the predefined angle.

After the polymerization is finished, the vial 3 may be moved to a post-processing unit, where the cap 5 with the attached filament 2 and the polymerized earpiece 10 may be automatically removed from the vial 3, remaining uncured liquid printing material 4 is automatically removed, e.g. by rinsing, and postcuring (e.g. light curing, in particular UV curing and/or oven curing) may be carried out, in particular automatically. Postcuring may comprise both, oven curing and light curing in either order. Moreover, rinsing may be performed prior to the postcuring or after the postcuring. The fully cured earpiece 10 formed as a result is then safe to be touched and can be removed from the cap 5 of the vial 3, to which it had still been attached through the filament 2. In other embodiments the solid structure 1 may have floated freely in the liquid printing material 4 without a filament 2, so at this point, the fully cured earpiece 10 will be floating freely in the remaining uncured liquid printing material 4 and can be removed from the vial 3 independently of the cap 5.

If the solid structure 1 is or comprises a receiver 6, microphone or hollow structure sealed with a protective element 8 in the vial 3, the protective element 8 can now be removed.

The process described above is fast (printing and post-processing take a few minutes each) and does not require a person handling the vial 3 to wear gloves as the vial 3 is sealed.

As the earpiece 10 is formed by volumetric 3D printing, subsequent assembly steps may not be required assuming the earpiece 10 is used unlacquered and without serialization. This makes the described solution suitable for in-shop-printing.

In other embodiments, the solid structure 1 may be a wireless earbud or a wired earphone, wherein the earpiece 10 is a custom shell directly printed on the earbud or earphone. The earbud or earphone may be pre-mounted on the vial 3 with a protective element 8, e.g. a plug or tight seal and the custom earpiece 10 is then 3D printed directly on the earbud or earphone.

In some embodiments, more than one solid structure 1 may be arranged in the vial 3 to produce a respective earpiece 10 around each solid structure 1. For example, two solid structures 1 may be arranged in the vial 3 spaced from each other to allow for producing two separate earpieces 10 around each solid structure 1.

In an exemplary embodiment, the cap 5 or lid may be configured to be only removable or to be particularly easily removable by the post-processing unit. For example, the cap 5 may be configured to be screwed on the vial 3 or attached by another locking mechanism and/or by mechanical friction, in particular in a way avoiding the cap 5 coming off by accident during transport and handling.

In an exemplary embodiment, a kit of cartridges 9 may be provided, the cartridges 9 having different components, e.g. electronic components and/or different receivers 6, filaments 2, and/or the cartridges 9 having different sizes to be able to provide a minimally sized cartridge 9 adapted to the size of a required custom component to be printed. The printer may be configured to request and/or suggest a certain type and/or size of a cartridge 9 after having been fed with 3D data to be printed. The printer may in general be configured to request and/or suggest a cartridge 9 in response to a user input regarding the desired product. The kit may also comprise other consumables, e.g. chemicals needed for rinsing the printed product.

In an exemplary embodiment, the extraction of the printed earpiece 10 from the vial 3 may be performed by the printer, by a user, or by a further device such as the post-processing unit.

In an exemplary embodiment, rinsing the earpiece 10 may be performed by the printer after extracting the three-dimensional body from the vial 3.

In an exemplary embodiment, curing the printed earpiece 10 may be performed by the printer after extracting the earpiece 10 from the vial 3 or after rinsing the earpiece 10.

In an exemplary embodiment, the finalized printed, rinsed and cured earpiece 10 may be ejected from the printer or post-processing unit.

In particular, rinsing and postcuring may occur without user interaction, i.e. without the user being exposed to the open vial 3.

A system for producing an earpiece 10 may comprise a prefabricated cartridge 9 and a printer and a separate rinsing module and/or curing module, e.g. integrated in the post-processing unit. Alternatively, the system may comprise the printer 9 having an integrated rinsing module and/or curing module.

Moreover, a conveyor device may be provided for conveying the cartridge 9 and/or the earpiece 10 from the printer to one of the modules and/or from one module to the next.

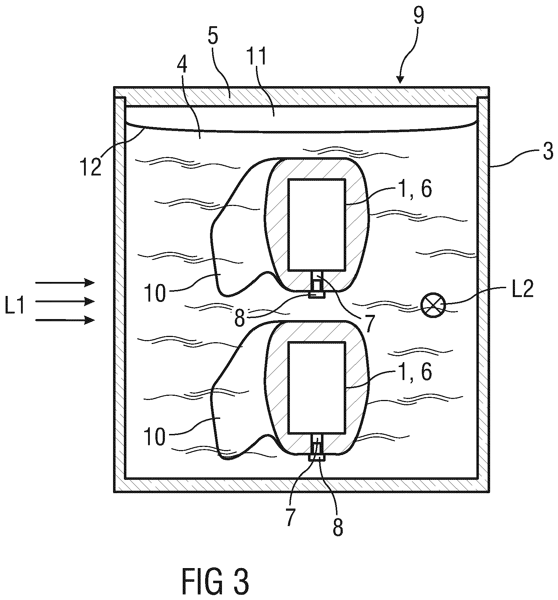

**Figure 3** is a schematic view of a method for producing an earpiece 10 according to another exemplary embodiment of the invention, e.g. for a hearing device.

The method uses volumetric 3D printing as described above.

The method comprises using a cartridge 9 which may be pre-manufactured in a mass manufacturing step. The pre-manufactured cartridge 9 comprises a translucent, in particular transparent, receptacle or vial 3 at least partially filled with the uncured liquid printing material 4, e.g. a resin. The at least one solid structure 1, e.g. a receiver 6, may freely float in the liquid printing material 4. In the embodiment shown in figure 3, two solid structures 1 flow freely in the liquid printing material 4 at different heights, e.g. one above the other. The vial 3 is completely sealed off with a cap 5 or lid arranged on top, allowing glove-free handling. This facilitates printing two or more earpieces 10 as the two or more solid structures 1 do not occlude each other with regard to the light beams L1, L2.

The liquid printing material 4 may have a high viscosity, e.g. more than 1 Pa s, in particular 1 Pa s to 100 Pa s. This allows for placing the solid structures 1 into the liquid printing material 4 at a determined position when manufacturing the vial 3 and the solid structure 1 to remain there at least until the vial is used in the volumetric 3D printing process. In an exemplary embodiment, a specific density of the solid structure 1 is configured to be within a certain range. If the specific density of the solid structure 1 is too high, in particular considerably higher than the specific density of the liquid printing material 4, the solid structure 1 may sink toward the bottom of the vial 3. If the specific density of the solid structure 1 is too low, in particular considerably lower than the specific density of the liquid printing material 4, the solid structure 1 may rise in the liquid printing material 4. In an exemplary embodiment, the specific density of the solid structure 1 is within the order of magnitude of the specific density of the liquid printing material 4 or similar or equal to the specific density of the liquid printing material 4. In an exemplary embodiment, the specific density of the solid structure 1 and/or of the liquid printing material 4 is in the range of 0.5 g/cm³ to 5 g/cm³. If the solid structure 1 is a hollow structure enclosing a volume of air, e.g. a receiver 6 with a sound port 7 sealed by a protective element 8 or membrane, the specific density of that solid structure 1 is lower than the specific density of the material, e.g. a metal, of which that solid structure is made.

If the viscosity of the liquid printing material 4 is sufficiently high, a difference between the specific density of the solid structure 1 and the liquid printing material 4 is less critical.

### List of References

- 1: solid structure
- 2: filament
- 3: vial
- 4: liquid printing material
- 5: cap
- 6: receiver
- 7: sound port
- 8: protective element
- 9: cartridge
- 10: earpiece
- 11: air pocket
- 12: interface
- L1: light beam
- L2: light beam

## Claims

1. A cartridge (9) comprising:
- a transparent vial (3), at least partially filled with a curable liquid printing material (4), in particular a resin,
- a cap (5) sealing the vial (3),
- at least one solid structure (1) submerged in the liquid printing material (4).

2. The cartridge (9) according to claim 1, wherein the at least one solid structure (1) is connected to a filament (2) or cable attached to the vial (3) or cap (5) and hangs from the filament (2) or cable into the liquid printing material (4) or wherein the at least one solid structure (1) floats freely in the liquid printing material (4).

3. The cartridge (9) of claim 2, wherein the filament (2) or cable (2) is lead through a sealed opening in the cap (5) or vial (3).

4. The cartridge (9) according to any one of the preceding claims, wherein the at least one solid structure (1) comprises an electric component such as an electronic circuit, a switch, a battery, an electrical to acoustical converter, a printed circuit board, a sensor, a microphone, and/or a non-electrical component such as a frame, a hook, an acoustic filter, a membrane, a connector, a handle, a removal filament, and/or a hollow structure.

5. The cartridge (9) of claim 4, the hollow structure is a vent and/or a backventing volume or an adapter configured to receive at least one electronic component or assembly.

6. The cartridge (9) of claim 4 or 5, wherein the receiver (6), sensor, microphone or hollow structure comprises at least one opening which is sealed by a removable protective element (8).

7. A kit of multiple cartridges (9) according to any one of the preceding claims, wherein the cartridges (9) have solid structures (1) of different type and/or size.

8. The kit of claim 7, further comprising chemicals for rinsing a product printed in the vial (3) around the solid structure (1).

9. A method for producing at least one earpiece (10), in particular for a hearing device, the method comprising:
- providing a cartridge (9) according to any one of the claims 1 to 6,
- inserting the cartridge (9) into a printer configured for volumetric 3D printing,
- providing the printer with data for the earpiece (10) to be printed,
- determining a location of the submerged solid structure using optical means,
- printing the at least one earpiece (10) around the at least one solid structure (1) by volumetric 3D printing using the printer,
- extracting the at least one earpiece (10) from the cartridge (9).

10. The method of claim 9, wherein the printing is performed by locally radiating the liquid printing material (4) with light beams (L1) having a first wavelength and light beams (L2) having a second wavelength, wherein for printing parts of the earpiece (10) for which the at least one solid structure (1) occludes the optical path of the light beams (L1, L2), the cartridge (9) is rotated at least once by a predefined angle and a volume of the earpiece (10) adjacent to the previously printed one is printed for each rotation.

11. The method of claim 9 or 10, wherein the cap (5) is removed from the vial (3) by the printer or by a post-processing unit to which the cartridge (9) has been moved after printing.

12. The method of claim 11, wherein the printed earpiece (10) is rinsed and postcured by the post-processing unit or by the printer.

13. The method of claim 12, wherein postcuring comprises light curing, in particular UV curing, and/or oven curing.

14. The method according to any one of claims 9 to 13, wherein the at least one earpiece (10) is extracted from the cartridge (9) by the printer or by the post-processing unit.

15. The method according to any one of the claims 9 to 14, wherein the protective element (8) is removed from the solid structure (1) configured as a receiver (6), microphone, sensor or hollow structure.

## Amended claims

### Amended claims in accordance with Rule 137(2) EPC.

1. A cartridge (9) comprising:
- a transparent vial (3), at least partially filled with a curable liquid printing material (4), in particular a resin,
- a cap (5) sealing the vial (3),
- at least one solid structure (1) submerged in the liquid printing material (4), wherein the cartridge (9) is to be used in a volumetric 3D printing process for printing a three dimensional structure around the at least one solid structure (1).

2. The cartridge (9) according to claim 1, wherein the at least one solid structure (1) is connected to a filament (2) or cable attached to the vial (3) or cap (5) and hangs from the filament (2) or cable into the liquid printing material (4) or wherein the at least one solid structure (1) floats freely in the liquid printing material (4).

3. The cartridge (9) of claim 2, wherein the filament (2) or cable (2) is lead through a sealed opening in the cap (5) or vial (3).

4. The cartridge (9) according to any one of the preceding claims, wherein the at least one solid structure (1) comprises an electric component such as an electronic circuit, a switch, a battery, an electrical to acoustical converter, a printed circuit board, a sensor, a microphone, and/or a non-electrical component such as a frame, a hook, an acoustic filter, a membrane, a connector, a handle, a removal filament, and/or a hollow structure.

5. The cartridge (9) of claim 4, the hollow structure is a vent and/or a backventing volume or an adapter configured to receive at least one electronic component or assembly.

6. The cartridge (9) of claim 4 or 5, wherein the receiver (6), sensor, microphone or hollow structure comprises at least one opening which is sealed by a removable protective element (8).

7. A kit of multiple cartridges (9) according to any one of the preceding claims, wherein the cartridges (9) have solid structures (1) of different type and/or size.

8. The kit of claim 7, further comprising chemicals for rinsing a product printed in the vial (3) around the solid structure (1).

9. A method for producing at least one earpiece (10), in particular for a hearing device, the method comprising:
- providing a cartridge (9) according to any one of the claims 1 to 6,
- inserting the cartridge (9) into a printer configured for volumetric 3D printing,
- providing the printer with data for the earpiece (10) to be printed,
- determining a location of the submerged solid structure using optical means,
- printing the at least one earpiece (10) around the at least one solid structure (1) by volumetric 3D printing using the printer,
- extracting the at least one earpiece (10) from the cartridge (9).

10. The method of claim 9, wherein the printing is performed by locally radiating the liquid printing material (4) with light beams (L1) having a first wavelength and light beams (L2) having a second wavelength, wherein for printing parts of the earpiece (10) for which the at least one solid structure (1) occludes the optical path of the light beams (L1, L2), the cartridge (9) is rotated at least once by a predefined angle and a volume of the earpiece (10) adjacent to the previously printed one is printed for each rotation.

11. The method of claim 9 or 10, wherein the cap (5) is removed from the vial (3) by the printer or by a post-processing unit to which the cartridge (9) has been moved after printing.

12. The method of claim 11, wherein the printed earpiece (10) is rinsed and postcured by the post-processing unit or by the printer.

13. The method of claim 12, wherein postcuring comprises light curing, in particular UV curing, and/or oven curing.

14. The method according to any one of claims 9 to 13, wherein the at least one earpiece (10) is extracted from the cartridge (9) by the printer or by the post-processing unit.

15. The method according to any one of the claims 9 to 14, wherein the protective element (8) is removed from the solid structure (1) configured as a receiver (6), microphone, sensor or hollow structure.
